# EUROPEAN PATENT SPECIFICATION

(11) **EP 4 705 019 B1**
(45) Date of publication and mention of the grant of the patent: **11.11.2026**
(21) Application number: 25727965.3
(22) Date of filing: 19.05.2025
(51) Int. Cl.: B01J 23/40, B01D 53/94, B01J 37/00

(54) **AN UNCALCINED CATALYST ARTICLE PRECURSOR FOR A DIESEL OXIDATION CATALYST**
UNKALZINIERTER KATALYSATORARTIKELVORLÄUFER FÜR EINEN DIESELOXIDATIONSKATALYSATOR
PRÉCURSEUR D'ARTICLE CATALYSEUR NON CALCINÉ POUR CATALYSEUR D'OXYDATION DIESEL

(30) Priority: 20.05.2024 WO PCT/CN2024/094208
(43) Date of publication of application: 11.03.2026
(73) Proprietor: Johnson Matthey Public Limited Company, Royston, Hertfordshire SG8 5HE (GB); Johnson Matthey (Shanghai) Chemicals Limited, Shanghai 201613 (CN)
(72) Inventor: HE, Jing, Shanghai 201613 (CN); SHANG, Zhou, Shanghai 201613 (CN); CHIFFEY, Andrew Francis, Royston Hertfordshire SG8 5HE (GB); COOPER, Oliver James, Royston Hertfordshire SG8 5HE (GB); GHOLAMI, Rahman, Royston Hertfordshire SG8 5HE (GB); MOREAU, Francois Pierre Henri, Royston Hertfordshire SG8 5HE (GB); PINTO, Jose Jorge Baeta Fontinha, Royston Hertfordshire SG8 5HE (GB)
(74) Representative: Johnson Matthey Public Limited Company
(86) International application number: PCT/GB2025/051087
(87) International publication number: WO 2025/243016

(56) References cited:
- WO-A1-2012/042479
- WO-A1-2017/118932

## Description

The present invention relates to an improved diesel oxidation catalyst (DOC) which is obtained by including a defined range of relatively high mass average molar mass (Mw or g/mol) PVP polymer in the washcoats used to form the article. The DOC is optimised for exotherm generation.

Internal combustion engines produce exhaust gases containing a variety of pollutants, including hydrocarbons (HCs), carbon monoxide (CO), and nitrogen oxides ("NOx"). Emission control systems, including exhaust gas catalytic conversion catalysts, are widely utilized to reduce the amount of these pollutants emitted to atmosphere. For compression-ignition (i.e., diesel) engines, the most commonly used catalytic converter is the diesel oxidation catalyst (DOC). DOCs typically contain palladium and/or platinum, generally supported on alumina. This catalyst converts particulate matter (PM), hydrocarbons, and carbon monoxide to carbon dioxide and water.

In modern exhaust systems, the DOC is used during normal operation to control these CO and HC emissions. The DOC's role in the passive oxidation of HC, CO and NOx present in the exhaust gas flow occurs throughout the operation of the engine and is optimised for the operating window of the DOC between about 250 and 300°C. The DOC can also be used to promote the conversion of NO to NO₂ for downstream passive filter regeneration (the combustion of particulate matter held on a filter in NO₂ at lower exhaust gas temperatures than in O₂ in the exhaust gas, i.e. the so-called CRT^{®} effect).

In addition, in a second role, the DOC may be used as an exotherm generation catalyst. This is performed via injection of hydrocarbon fuel into exhaust gas upstream of the DOC. For the avoidance of doubt, the fuel injection/exotherm generation event does not take place during normal operation: normal operation is considered to be the period between fuel injection/exotherm generation events. The exotherm generation role can serve one of several purposes. For example, the exotherm can be generated to actively combust soot on downstream filters when an unacceptable increase in back pressure is detected, i.e. active filter regeneration. Another example is for the regeneration of SCR catalysts, such as by removing sulphur from downstream CuCHA SCR catalysts.

In order to generate these exotherms an amount of hydrocarbon (HC) is injected upstream of the DOC (~10,000-20,000 ppm C1). Provided that the DOC is hot enough, the combustion of injected HC on the DOC will lead to the production of an exotherm, heating the exhaust gases and, consequently, heating those downstream components (up to temperatures of around 500°C). If the DOC is not hot enough then it is necessary through engine management to provide a hotter exhaust from the engine with an associated energy and performance impact in order to raise the DOC temperature to above a temperature when the DOC can sustain an exotherm.

WO2012/042479 discloses the polymer-assisted synthesis of a catalyst. Suitable polymers are said to be those having an average molecular weight of less than 500,000 g/mol. Polyvinylpyrrolidone is a contemplated polymer, but this is said to desirably have an average molecular weight Mw from 100 to 100,000 g/mol, more preferably from 500 to 50,000 g/mol, more preferably from 1 ,000 to 25,000 g/mol, more preferably from 5,000 to 15,000 g/mol, more preferably from 8,000 to 12,000 g/mol, and even more preferably from 9,000 to 11,000 g/mol.

The method of WO2012/042479 involves (i) providing one or more support materials; (ii) providing one or more polymers on the support material; and (iii) providing one or more metals on the one or more supported polymers; wherein in step (ii) the one or more polymers do not comprise cross-linked polymers and/or polymers which have been reacted with a cross-linking agent.

WO2017/118932 discloses colloidal platinum group metal nano particle compositions and their use in making catalyst articles comprising a diesel oxidation catalyst coated on a substrate, wherein the compositions comprise a plurality of platinum group nanoparticles substantially in fully reduced form, wherein the nanoparticles have an average particle size of about 1 to about 10 nm and at least about 90% of the nanoparticles have a particle size of +/- about 2 nm of the average particle size. The nanoparticles can, advantageously, be substantially free of halides, alkali metals, alkaline earth metals, sulfur compounds and boron compounds.

Methods of making the colloidal platinum group metal nano particle compositions disclosed in WO2017/118932 comprise an ordered two-step procedure of a) preparing a solution of platinum group metal precursors in the presence of a dispersion medium and a water-soluble polymer suspension stabilizing agent, wherein the platinum group metal precursors are substantially free of halides, alkali metals, alkaline earth metals, sulfur compounds, and boron compounds; and b) combining the solution with a reducing agent to provide a platinum group metal nanoparticle colloidal dispersion wherein the nanoparticle concentration is at least about 2 wt. % of the total weight of the colloidal dispersion and wherein at least about 90% of the platinum group metal in the colloidal dispersion is in fully reduced form. The resulting colloidal PGM nano particles are described as being "shelf-stable" and can be stored separately for a period of at least 3 months. The water-soluble polymer suspension stabilizing agent can have a Mw of 2,000 to 2,000,000 Da and preferably 10,000 to 60,000 Da. Exemplified water-soluble polymer suspension stabilizing agent include PVP of unspecified Mw; and exemplified reducing agents include ascorbic acid, glucose and ethylene glycol. The Examples in WO2017/118932 disclose the addition of pre-formed colloidal platinum group metal nano particle compositions to a slurry suspension of a refractory metal oxide material or else the impregnation of pre-formed colloidal platinum group metal nano particle compositions refractory metal oxide material pre-coated and calcined onto a substrate.

There is a desire for the provision of an improved diesel oxidation catalyst (DOC), particularly one with improved exotherm performance or one which has the same performance with lower PGM use. It is an object of the present invention to address this problem, tackle the disadvantages associated with the prior art, or at least provide a commercially useful alternative thereto.

According to a first aspect there is provided an uncalcined catalyst article precursor for a diesel oxidation catalyst (DOC), the catalyst article precursor comprising: a substrate comprising a plurality of channels extending from an inlet face to an outlet face, and a first washcoat layer provided in and/or on walls of the channels of the substrate, comprising Pt, or Pt and Pd in a weight ratio of Pt:Pd of greater than 2:1, a support material and a high molecular weight polymer, wherein the high molecular weight polymer is a PVP homo- or co-polymer and having a molecular weight of greater than 1,000,000 g/mol to 1,750,000 g/mol.

In the following passages different aspects/embodiments are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The inventors were tasked with providing a reduced cost and high efficiency DOC. The inventors sought to reduce the costs by using reduced levels of PGMs or ones with reduced Pd-content since, as of the date of filing, the cost of Pd is greater than the cost of Pt. As would be appreciated, the reduction in platinum-group metals (PGMs) lead to a lower performance. Decreasing the Pd-content may also reduce the performance of the article.

The inventors surprisingly found that the inclusion of a specific class of very high molecular weight polymer, higher than those typically used as dispersants, lead to lowered exotherm quench temperatures, but only in Pt-rich (>2:1) washcoat layers. Surprisingly, there was also an NO to NO₂ oxidation improvement. The further research showed additional benefits in specific embodiments focusing on the polymer loading amount and in the presence of barium.

The inventors have found that through the use of a defined range of relatively high molecular weight polymers they can provide a high efficiency DOC with a reduced cost, since the polymer is much cheaper than PGM and the part can be provided with a lower total PGM content.

Without wishing to be bound by theory, it was believed that the polymer is not just acting as a dispersant, but the largest contributing factor is that the PVP has an effect on mediating calcination temperatures, whereby the localised calcination of the PGMs in the precursor may be longer and/or slower, such that the PGMs are in a more favourably dispersed state for use. We believe this helps sinter the PGM to a preferred particle size which is then more stable upon ageing up to 650°C. We saw this effect on the XRD pattern, where PVP containing catalysts have a lower PGM particle size in the aged state. This is supported by evidence showing that the internal temperatures of the parts during calcination was higher with the defined, relatively higher molecular weight polymer range - therefore the benefit seems to be tied to a different calcination profile observed by the PGMs (see Example 6 hereinbelow).

One potential impact of this calcination effect is that it is preferred in zone coated embodiments described hereinbelow that the second washcoat layer also comprises PVP, because Applicant has experienced cracking of ceramic substrates at a join between zones where a higher calcination temperature is induced in one zone relative the other.

This calcination effect is not disclosed or suggested in WO2017/118932. Additionally, WO2017/118932 discloses that the purpose of the reducing agent for forming the colloidal platinum group metal nano particle compositions is to reduce PGM salts to particles of metallic (PGM(0)). In inventors' experience, such reduction to PGM(0) would typically be accompanied by a colour change in the composition. Applicant notes that, in WO2017/118932, citric acid is included in a list of possible reducing agents and Applicant's Examples illustrate that citric acid is an optional washcoat component. However, Applicant uses citric acid in this context not to reduce the PGMs in solution to particles of PGM(0) but to stabilise the PGM salts in solution and to provide a mild calcination exotherm; there is no associated colour change on addition of citric acid to the washcoat compositions of Applicant's Examples. That is, Applicant's inventors do not believe that citric acid is a sufficiently strong reducing agent to reduce the PGMs to PGM(0) according to the disclosure of WO2017/118932. In this regard, Applicant notes that the Examples of WO2017/118932 use ascorbic acid and not citric acid.

One way to examine performance of DOCs is to look at quench temperatures. These are obtained by testing exotherm failure temperatures. In the accompanying Examples, this is a measure of the inlet temperature observed, in a continuously decreasing inlet temperature run, at which the outlet temperature dropped below 500°C. In other words, it reflects the temperature at which the inlet temperature was insufficient to trigger exotherm generation above a pre-determined threshold outlet temperature of at least 500°C. A more effective catalyst can generate and sustain an exotherm from lower inlet temperatures. Several of the benefits of this invention are tied to improved exotherm quench temperatures (i.e. lower) as discussed below and as demonstrated in the examples.

The present invention relates to an uncalcined catalyst article precursor for a diesel oxidation catalyst (DOC). That is, it relates to an uncalcined catalyst article precursor which, when calcined, is suitable for use as a DOC. The focus here is on the uncalcined part since the PVP polymer component is "burned out" in the calcination step and is not present in the final catalyst article, albeit that the improved performance arising from the associated improved PGM dispersion is still observed.

Catalyst articles are well known in the art and this term is used to refer to a catalyst coated substrate or component of an exhaust gas treatment system referred to as a "brick". DOC catalyst articles are well known in the art and the skilled person is able to make and design suitable compositions and configurations for establishing a DOC. The critical addition in the present invention is the PVP polymer, which could be added within a conventional washcoat without difficulty by the skilled person.

By "uncalcined" it is meant that the article precursor has not been subjected to a calcination step. Calcination is well known in the art and is typically performed at temperatures greater than 400°C, preferably greater than 500°C. It is preferred that the uncalcined precursor has first been dried to remove moisture, since this locks the washcoat in place. Typical drying temperatures are 100 to 120°C. Accordingly, preferably the uncalcined precursor has not been subjected to temperatures in excess of 200°C, more preferably not more than 150°C, preferably not more than 125°C, after the first washcoat layer has been formed. The focus on the uncalcined product ensures that the PVP component has not been removed or fully removed by combustion from the produced structure.

The catalyst article precursor comprises a substrate comprising a plurality of channels extending from an inlet face to an outlet face. The plurality of channels extends in the longitudinal direction and provide a plurality of inner surfaces (e.g. the surfaces of the walls defining each channel). When the substrate is a flow-through substrate, each of the plurality of channels has an opening at the first face and an opening at the second face. When the substrate is a wall-flow substrate, each of the plurality of channels has an opening at the first or second face and a closed end at the other face. Preferably the substrate is a flow-through substrate or a wall-flow substrate, but DOCs are typically formed on flow-through substrates, which are thus most preferred. For the avoidance of doubt, the term "substrate" and "monolith substrate" are used interchangeably herein.

The channels may be of a constant width and each plurality of channels may have a uniform channel width. Preferably within a plane orthogonal to the longitudinal direction, the monolith substrate has from 300 to 900 channels per square inch, preferably from 400 to 800. The channels can have cross sections that are rectangular, square, circular, oval, triangular, hexagonal, or other polygonal shapes. Where the substrate is a wall-flow substrate, at least one inlet channel(s) can have a hollow cross-sectional area greater than that of at least one outlet channel(s) or *vice versa.* That is, the hollow cross-sectional area of channels at one substrate end is "asymmetric" compared to that of channels at the other substrate end.

The substrate acts as a support for holding coated catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal; hence the informal name "brick". Such materials and their use in the manufacture of porous monolith substrates are well known in the art.

It should be noted that the substrate described herein is a single component (i.e. a single brick), nonetheless, when forming an emission treatment system, the substrate used may be formed by adhering together a plurality of channels or by adhering together a plurality of smaller substrates as described herein. This is known e.g. from silicon carbide wall-flow filters, because of the inherent coefficient of thermal expansion (CTE) of SiC. Such techniques are well known in the art, as well as suitable casings and configurations of the emission treatment system.

In embodiments, the precursor comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo-aluminosilicates (such as cordierite and spodumene), or a mixture or mixed oxide of any two or more thereof. Cordierite, a magnesium aluminosilicate, and silicon carbide are particularly preferred.

In embodiments wherein the precursor comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

The DOC can have an inlet-end front zone and an outlet-end rear zone. These zones can both be provided with a single coating (i.e. the first washcoat), or they may each be separately coated (i.e. one with the first washcoat and the other with a second or further washcoat). The length of these zones is defined by the coatings applied to the substrate.

Preferably the inlet-end front zone (also referred to as FZ herein) extends from 20 to 60% of a length of the substrate from the inlet end, and/or, wherein the outlet-end rear zone (also referred to as RZ herein) extends from 40 to 90 % of a length of the substrate from the outlet end. More preferably the inlet-end front zone extends from 30 to 50% of a length of the substrate from the inlet end, and/or, wherein the outlet-end rear zone extends from 50 to 70% of a length of the substrate from the outlet end. Most preferably the inlet-end front zone extends about 40% of a length of the substrate from the inlet end, and/or, wherein the outlet-end rear zone extends about 60% of a length of the substrate from the outlet end.

The catalyst article precursor comprises a first washcoat layer provided in and/or on walls of the channels of the substrate.

The first washcoat layer comprises Pt, or Pt and Pd in a weight ratio of Pt:Pd of greater than 2:1. Preferably the first washcoat layer comprises Pd and wherein the weight ratio of Pt:Pd is ≤10:1, preferably ≤6:1, and/or wherein the Pt:Pd is from 10:1 to >2:1, preferably from 6:1 to 3:1. There is data included herein which looks at the ratio of Pt:Pd and shows that the beneficial effects are observed in Pt-rich DOCs. In Pd-rich DOCs the exotherm quench temperature actually increases. Some of the data shows that adding PVP has the most significant benefit on NOx conversion at low levels of Pt. Adding more Pt increases the cost of the article and improves performance, but PVP allows even a low level to be significantly improved. Drop in performance with aging also appears to be lowest with PVP.

Preferably the first washcoat layer has a PGM loading (i.e. total Pt and any Pd) of less than 20g/ft³, preferably from 15 to 5g/ft³.

The first washcoat comprises a support material. Preferably the support material comprises optionally doped alumina, preferably silica-doped alumina. The alumina support may be any form of alumina but preferably comprises gamma alumina or most preferably silica-doped alumina due to its improved thermal durability. The alumina may be doped with a dopant to improve performance, such as silicon or lanthanum. Amounts of dopants are typically from 0.1 to 15wt%, preferably from 1 to 7wt% and most preferably about 5wt%. Preferably the alumina support in the first washcoat is alumina doped with silicon in the quantities defined above.

The first washcoat comprises a relatively high molecular weight polymer of defined Mw range. The relatively high molecular weight polymer is a PVP homo- or co-polymer. The general structure of a PVP homo-polymer is shown below, although the sidechain may optionally be substituted, such as with one or more C1-C6 alkylchains:

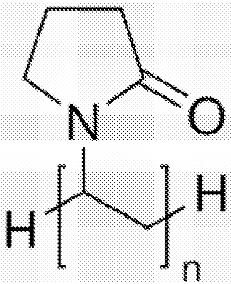

The high molecular weight polymer has a molecular weight of greater than 1,000,000 g/mol to 1,750,000 g/mol measured by Gel Permeation Chromatography. Preferably the high molecular weight polymer has a molecular weight of from 1,100,000 to 1,700,000 g/mol, most preferably 1,100,000 to 1,600,000 g/mol. There are data included herein comparing Mw of ~14,200 and 26,000 to 1,130,000 and ~66,800 to 1,570,000 and 3,470,000. These show that the addition of low Mw PVP increases the quench temperature relative to a reference with no PVP, whereas in the selected high Mw range the quench temperature is reduced. The data show that for the PVP above 1,000,000 the quench temperature is better than the reference article. There is also data to show that catalysts made using 1,130,000 and 1,570,000 molecular weight PVP is improved somewhat more, relative to the 3,470,000.

The terms "molecular weight" and "average molecular weight" are used synonymously herein. Techniques for measuring average molecular weights are well known in the art and, indeed, average molecular weights are routinely provided by polymer manufacturers for their products. For the avoidance of doubt, these are number average molecular weights, which are standard in the art.

Manufacturers often classify their high molecular weight polymers with a so-called K-value. These are discussed in detail in "Viscosity Correlation for Aqueous Polyvinylpyrrolidone (PVP) solutions" by Jason Swei and Jan Talbot, Journal of Applied Polymer Science, Vol 90, 1153-1133 (2003), K-values are based on kinematic viscosity measurements and reflect a function of the average molecular weight, the degree of polymerisation and the intrinsic viscosity. The K-value is determined by measuring the viscosity of the PVP in a fixed solution concentration with a specific apparatus, as discussed in this document. At K-values >95 a solution at 0.1wt% is tested and at K-values of 18-95 the solution is 1w/v%.

Preferably the relatively high molecular weight polymer has a K-value of 88 to 100 and most preferably from 88 to 96.

In an alternative embodiment, the high molecular weight polymer is characterised solely by its K-value, rather than its molecular weight, such that the molecular weight is not limited, providing that the K-value is met. In these embodiments, preferably the high molecular weight polymer has a K-value of 88to 100, and most preferably from 88 to 96, and the high molecular weight polymer has a molecular weight of greater than 1,000,000 g/mol to 1,750,000 g/mol, as described above.

The PVPs for use in the present invention can be added as a powder or as a liquid; higher Mw PVP can be readily solute in water. PVP solutions are less problematic to handle than powder forms for health and safety reasons.

It is most preferred that the PVP is a homo-polymer, but when the PVP is a co-polymer, preferably the PVP monomers represent at least 60wt% of the co-polymer, more preferably at least 80wt% and most preferably at least 90wt%, and most preferably at least 95wt%.

Preferably the first washcoat layer comprises the high molecular weight polymer in an amount of 1.77 to 10.60 g/L (50 to 300g/ft³), preferably 5.30 to 8.83 g/L (150 to 250g/ft³). There is also data to show an optimal loading of the PVP. If there is too much PVP then it becomes too difficult to form the washcoat for coatability, particularly because the washcoat becomes too viscous. 8.48 g/L (240g/ft³) was better than 4.24 g/L (120g/ft³) such that at least 5.65 g/L (160g/ft³) is preferred. The data confirms that the specific loading can be optimised relative to the PGM loading, since at the higher PGM content the PVP benefit is still observed, whereas for medium PGM loadings the PVP benefit may peak at a lower PVP loading.

Preferably the first washcoat layer further comprises barium in an amount of from 0.18 to 7.06 g/L (5 to 200g/ft³), preferably 2.19 to 4.41 g/L (60 to 125g/ft³). The inclusion of barium in a DOC improves the exotherm performance. Barium is typically added as a salt of barium, such as barium acetate. However, the inventors have now surprisingly found a particular performance benefit associated with the use of Ba hydroxide (i.e. Ba(OH)₂) instead. Preferably the first washcoat layer comprises Ba hydroxide . There are data that show in general that exotherm quench temperature is better for Ba acetate than Ba hydroxide , but when PVP is present, this is reversed. Ba hydroxide is better and performance is better with the PVP than without, particularly with lower molecular weight PVP, e.g. from 1,000,000 to 1,750,000.

Preferably the catalyst article precursor has a total PGM loading of less than 1.06 g/L (30g/ft³), preferably 0.18 to 1.06 g/L (5 to 30 g/ft³), most preferably 0.25 to 0.71 g/L (7 to 20g/ft³). The use of the lower levels of PGM in the DOC reduces the part cost but can be compensated through the performance benefit observed when using PVP.

Preferably the first washcoat layer is free from zeolite. This is because the benefit of the PVP-type polymer addition is comparable to the advantage of adding zeolite, so there is no need to take both steps unless particularly strong performance is required.

Preferably the catalyst article precursor further comprises a second washcoat layer. The second washcoat layer preferably has a composition as defined for the first washcoat layer discussed herein and provided in and/or on walls of the channels of the substrate. That is, the second washcoat layer comprises the other discussed components of a DOC washcoat composition of the first washcoat layer, so can be with or without the PVP high molecular weight polymer but preferably is a washcoat layer comprising PVP. However, when both the first and second washcoats contain PVP, the second washcoat layer can have a PGM loading greater than a PGM loading of the first washcoat layer, preferably at least 0.18 g/L (5g/ft³) greater, more preferably at least 0.35 g/L (10g/ft³) greater. The data generally show that adding PVP to a Pt-rich DOC lowers the observed inlet quench temperature by 20°C. The biggest benefits are observed when the PVP is used in front and rear zone.

There are further data that show that PVP addition gives exotherm generation similar to that of a beta zeolite-containing front zone. Providing beta in the front (inlet) zone (FZ) and PVP in both zones has the best performance, particularly with regard to low HC slip.

Preferably the second washcoat layer extends from the inlet face. That is, in use, the second washcoat which contains more PGM loading forms the layer which contacts the exhaust gas to be treated first. The second washcoat can - where the substrate is the preferred flow-through substrate - over-lap or under-lap the first washcoat as necessary, depending on which is applied first. There is generally a desire to avoid having an uncoated region of the substrate, so the first and second washcoat layers will preferably meet or overlap, especially when they form the only washcoats in the article. In use the substrate is used in an exhaust system of a diesel engine, wherein the substrate inlet face is oriented to the upstream side.

In one embodiment, the invention comprises an exhaust system for a diesel engine comprising an injector for injecting a hydrocarbon for combustion on a calcined catalyst article obtained or obtainable by calcining the uncalcined catalyst article precursor according to the invention into exhaust gas flowing in the exhaust system and operably connected to a source of hydrocarbon and a calcined catalyst article obtained or obtainable by calcining the uncalcined catalyst article precursor according to the invention disposed in a flow direction downstream from the injector, whereby the calcined catalyst article is for generating an exotherm from injected hydrocarbon in contact therewith to heat exhaust gas flowing in the exhaust system, wherein an inlet face of the substrate is oriented to an upstream side to receive hydrocarbon injected from the injector.

In a further embodiment, the invention provides an apparatus comprising a diesel engine connected to an exhaust system according to the invention.

In the exhaust system of the invention, a catalysed wall-flow filter substrate can be located downstream from the outlet face of the substrate for receiving a heated exhaust gas, thereby to combust particulate matter trapped thereon. A catalyst of the catalysed wall-flow filter can be a catalyst comprising a PGM, such as Pt only or both Pt and Pd; or a selective catalytic reduction (SCR) catalyst, such as a copper-promoted zeolite, preferably a zeolite of the CHA or AEI framework type.

In addition to a catalysed wall-flow filter substrate comprising a PGM, such as Pt only or both Pt and Pd, the exhaust system can comprise a flow-through monolith substrate comprising a SCR catalyst, such as a copper-promoted zeolite, preferably a zeolite of the CHA or AEI framework type located downstream from the catalysed wall-flow filter substrate.

Where the exhaust system comprises a SCR catalyst, the exhaust system comprises an injector for injecting ammonia or a precursor thereof, such as urea, into exhaust gas flowing in the exhaust system upstream from the substrate comprising the SCR catalyst, which injector being operably connected to a source of ammonia or a precursor thereof. Where the exhaust system comprises a catalysed wall-flow filter substrate comprising a PGM, the injector for injecting ammonia or a precursor thereof is located downstream from the catalysed wall-flow filter substrate.

Preferably, a flow-through monolith substrate comprising an ammonia slip/AMOX catalyst can be disposed downstream from the most downstream SCR catalyst in the exhaust system.

Preferably the substrate has a longitudinal length extending from the inlet face to the outlet face, and the second washcoat layer extends 20 to 60% of said longitudinal length.

Preferably the second washcoat layer has a PGM loading of less than 1.06 g/L (30g/ft³), preferably from 0.88 to 0.53 g/L (25 to 15g/ft³).

Preferably the uncalcined catalyst article precursor further comprises a zeolite-containing layer extending from the inlet face and arranged under at least a portion of the second washcoat layer. For the avoidance of doubt, the requirement that the second washcoat layer is in or on the walls of the substrate encompasses embodiments where the second washcoat layer is formed on top of a pre-applied zeolite-containing layer formed on or in the walls of the substrate.

The term "zeolites" here also includes molecular sieves, which are sometimes also referred to as "zeolite-like" compounds. Molecular sieves are preferred if they belong to one of the aforementioned structure types. Examples include aluminosilicates, silica aluminium phosphate zeolites, which are known by the term "SAPO", and aluminium phosphate zeolites, which are known by the term "AIPO". Preferred zeolites are aluminosilicates that have a SAR (silica-to-alumina ratio) value of 2 to 100, in particular of 5 to 50.

Preferably the zeolite in the zeolite-containing layer includes or consists of a large pore aluminosilicate zeolite, preferably Beta zeolite. Suitable amounts for the large pore zeolite are from 30.5 to 183.1 g/L (0.5 to 3.0g/in³), preferably from 61.0 to 122.0 g/L (1.0 to 2.0g/in³).

Preferably the first washcoat layer extends from the outlet face. That is, in use, the first washcoat forms the layer which contacts the exhaust gas to be treated last. Preferably the first washcoat layer extends 40 to 90% of said longitudinal length.

According to a further aspect there is provided a calcined catalyst article obtained or obtainable by calcining the uncalcined catalyst article precursor discussed above. As will be appreciated, the act of calcining the uncalcined catalyst article precursor will lead to the decomposition and removal of organic components, in particular the PVP polymer component. The PVP, although removed by calcination, has a direct effect on the structure of the final product and in particular on the location and distribution of the key PGM components.

According to a further aspect there is provided a method for the manufacture of an uncalcined catalyst article precursor for a diesel oxidation catalyst (DOC), the method comprising:
(i) providing a substrate comprising a plurality of channels extending from an inlet face to an outlet face;
(ii) forming a first washcoat composition; and
(iii) wash-coating the first washcoat composition onto the substrate to form a first washcoat layer;

wherein the first washcoat composition comprises Pt, or Pt and Pd in a weight ratio of Pt:Pd of greater than 2:1, a support material and a high molecular weight polymer; and
wherein the high molecular weight polymer is a PVP homo- or co-polymer having a molecular weight of greater than 1,000,000 g/mol to 1,750,000 g/mol.

All aspects of the product discussed herein may be freely combined with the method aspect, such as, for example, the further preferred restrictions on the molecular weight discussed herein. Preferably the method of this aspect is for the manufacture of the uncalcined catalyst article precursor described herein.

Preferably the PVP homo- or co-polymer is added directly to the first washcoat composition and is not pre-supported on the support material. Preferably the Pt, Pd if present, support material and high molecular weight polymer are added separately when forming the first washcoat composition. The addition of the high molecular weight polymer directly into the washcoat avoids the need for any complex additional step of preloading the polymer onto the support, as in WO2012/042479. Without wishing to be bound by theory, it is considered that the relatively high molecular weight material has a beneficial effect without requiring the need to be pre-supported.

As discussed above, preferably the high molecular weight polymer has a K-value of at least 88 to 100, preferably from 88 to 96. As also discussed above, K-value measurements are performed according to industry standards and are shown on manufacturer data sheets.

In an alternative embodiment, the high molecular weight polymer provided and used in this method is characterised solely by its K-value, rather than its molecular weight, such that the molecular weight is not limited, providing that the K-value is met. In these embodiments, preferably the high molecular weight polymer has a K-value of 88 to 100, preferably from 88 to 96, and the high molecular weight polymer has a molecular weight of greater than 1,000,000 g/mol to 1,750,000 g/mol, as described above.

Preferably the method further comprises calcining the uncalcined catalyst article precursor. That is, a preferred method as described herein for the manufacture of a catalyst article comprises:
(i) providing a substrate comprising a plurality of channels extending from an inlet face to an outlet face;
(ii) forming a first washcoat composition;
(iii) wash-coating the first washcoat composition onto the substrate to form a first washcoat layer to form an uncalcined catalyst article precursor; and
(iv) calcining the uncalcined catalyst article precursor;

wherein the first washcoat composition comprises Pt, or Pt and Pd in a weight ratio of Pt:Pd of greater than 2:1, a support material and a high molecular weight polymer; and
wherein the high molecular weight polymer is a PVP homo- or co-polymer having a molecular weight greater than 1,000,000 g/mol to 1,750,000 g/mol.

Additionally, as WO2017/118932 does not disclose or suggest the technical effect of the defined PVP on the generation of localised calcination exotherm temperatures, the invention may also be defined as the use of a high molecular weight PVP homo- or co-polymer having a molecular weight greater than 1,000,000 g/mol to 1,750,000 g/mol in the manufacture of a calcined diesel oxidation catalyst article having improved exotherm generation activity, which calcined diesel oxidation catalyst article comprising a substrate comprising a plurality of channels extending from an inlet face to an outlet face coated with a washcoat composition comprising Pt, or Pt and Pd in a weight ratio of Pt:Pd of greater than 2:1, wherein the PVP homo- or co-polymer is added to a slurry of washcoat composition comprising aqueous salts of the Pt, or Pt and Pd and a support material, which is then coated on the substrate, dried and calcined.

The formation of washcoat layers as discussed above and comprising a PGM is well known in the art. This generally involves preparing a washcoat slurry. This involves mixing together a number of ingredients. The term "slurry" as used herein may encompass a liquid comprising insoluble material, e.g. insoluble particles. The slurry may comprise (1) solvent; (2) soluble content, e.g. free PGM ions (i.e. outside of the support); and (3) insoluble content, e.g. support particles. A slurry is particularly effective at disposing a material onto a substrate, in particular for maximized gas diffusion and minimized pressure drop during catalytic conversion. The slurry is typically stirred, more typically for at least 10 minutes, more typically for at least 30 minutes, even more typically for at least an hour. The stirring of the slurry may occur prior to disposing the slurry on the substrate, for example.

A first preferable ingredient in a washcoat slurry is a support material. Support materials are generally refractory metal oxide powders. It is preferred that the refractory metal oxide support material is selected from the group consisting of alumina, silica, titania, zirconia, ceria and a composite oxide or a mixed oxide of two or more thereof, most preferably selected from the group consisting of alumina, silica and zirconia and a doped oxide, composite oxide or a mixed oxide of two or more thereof. Mixed oxides or composite oxides include silica-alumina and ceria-zirconia, most preferably silica-alumina. Preferably, the refractory metal oxide support material does not comprise ceria or a mixed oxide or composite oxide including ceria. More preferably, the refractory oxide is selected from the group consisting of alumina, silica and preferably silica-doped alumina. The refractory oxide may be alumina. The refractory oxide may be silica. The refractory oxide may be preferably silica-doped alumina, e.g. alumina doped with 5wt% silicon.

The inclusion of a dopant may stabilise the refractory metal oxide support material or promote catalytic reaction of the supported platinum group metal. Typically, the dopant may be selected from the group consisting of zirconium (Zr), titanium (Ti), silicon (Si), yttrium (Y), lanthanum (La), praseodymium (Pr), samarium (Sm), neodymium (Nd), barium (Ba) and an oxide thereof. In general, the dopant is different to the refractory metal oxide (i.e. the cation of the refractory metal oxide). Thus, for example, when the refractory metal oxide is titania, then the dopant is not titanium or an oxide thereof.

When the refractory metal oxide support material is doped with a dopant, then typically the refractory metal oxide support material comprises a total amount of dopant of 0.1 to 10% by weight. It is preferred that the total amount of dopant is 0.25 to 7% by weight, more preferably 2.5 to 6.0% by weight. Preferably the dopant is silica, because oxidation catalysts comprising such support materials in combination with platinum group metals and alkaline earth metals promote oxidation reactions, such as CO and hydrocarbon oxidation. Preferably the support material is selected from optionally doped alumina, silica, titania and combinations thereof.

A further ingredient in the washcoat is the PGM component, preferably a salt of the PGM components. Thus, the washcoat typically contains a palladium (Pd) salt and/or a platinum (Pt) salt. Preferably these salts are readily soluble in water. Preferably the Pd and Pt salts are independently selected from nitrates, chlorides and bromides. Preferably the washcoat slurry is rhodium (Rh) free. Preferably the platinum-group metals present in the washcoat slurry consist of Pt and Pd.

Optional further ingredients which are conventional in forming washcoat slurries may also be present. These include one or more of a binder and a thickening agent. Binders may include, for example, an oxide material with small particle size to bind the individual insoluble particles together in washcoat slurry. The use of binders in washcoats is well known in the art. Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include galactomannan gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxycellulose.

The slurry preferably has a solids content of from 10 to 40%, preferably from 15 to 35%, by weight. Such a solids content may enable slurry rheologies suitable for disposing the loaded support material onto the substrate. For example, if the substrate is a honeycomb monolith, such solid contents may enable the deposition of a thin layer of washcoat onto the inner walls of the substrate.

Forming a washcoat layer to obtain a coated substrate involves a step of applying the washcoat slurry to at least a portion of the substrate to form a washcoated substrate. Disposing the slurry on a substrate may be carried out using techniques known in the art. Typically, the slurry may be poured into the inlet of the substrate using a specific moulding tool in a predetermined amount, thereby disposing the loaded support material on the substrate. As discussed in more detail below, subsequent vacuum and/or air knife and/or drying steps may be employed during the disposition step. When the substrate is a filter block, the loaded washcoat slurry may be disposed on the filter walls, within the filter walls (if porous) or both. Zone-coated products can be prepared using the apparatus and method described in Applicant's WO 1999/047260A1.

The pH of the slurry may be adjusted using nitric acid or citric acid and optionally a base such as ammonia or barium hydroxide, before coating, in order to obtain the desired pH. Use of a base may be useful for ensuring that the pH is not adjusted to a pH that is too low.

The method may then comprise subjecting the coated substrate to calcination. The term "calcine", or "calcination", means heating the material in air or oxygen. This definition is consistent with the IUPAC definition of calcination. (IUPAC. Compendium of Chemical Terminology, 2nd ed. (the "Gold Book"). Compiled by A. D. McNaught and A. Wilkinson. Blackwell Scientific Publications, Oxford (1997). XML on-line corrected version: http://goldbook.iupac.org (2006-) created by M. Nic, J. Jirat, B. Kosata; updates compiled by A. Jenkins. ISBN 0-9678550-9-8. doi: 10.1351/goldbook). The temperatures used in calcination depend upon the components in the material to be calcined and generally are between about 400°C to about 900°C for approximately 1 to 8 hours. In some cases, calcination can be performed up to a temperature of about 1200°C. In applications involving the processes described herein (i.e. conventional DOC preparation), calcinations are generally performed at temperatures from about 400°C to about 600°C for approximately 1 to 8 hours, preferably at temperatures from about 400°C to about 550°C for approximately 1 to 4 hours. The calcination temperature should be selected so that it corresponds to a combustion temperature of the PVP, thereby ensuring the generation of the additional exotherm from PVP combustion.

Calcination is typically carried out in an oven or furnace, more typically a belt, dynamic or static oven or furnace, typically in hot air at a specific flow from one direction. Either step may also comprise an initial drying step. The drying and heat treatment steps may be continuous or sequential. For example, a separate washcoat may be applied after the substrate is already washcoated and dried with a previous washcoat. A washcoated substrate can also be dried and heat treated using one continuous heating program if coating is completed. As a result of the heating (calcination), the substrate is typically substantially free of organic compounds, more typically completely free of organic compounds.

### EXAMPLES

The invention will now be disclosed further in relation to the following non-limiting examples.

The articles disclosed in the Examples were prepared in a manner based on the method disclosed in Applicant's WO 1999/047260 A1.

### Comparative Example 1

A cylindrical cordierite flow-through honeycomb monolith substrate, i.e. channels open at both ends) of 62.0 cells per square centimetre (400 cells per square inch) and having dimensions of length 10.2 cm (4 inches) x a diameter of 26.7 cm (10.5 inches) was coated with a first catalyst washcoat slurry containing aqueous salts (as nitrates) of platinum and palladium, barium acetate, citric acid and a 5wt% silica-doped alumina particulate support to 70% of the axial length of the substrate from an end of the substrate designated as the outlet end. The resulting substrate coated with the first catalyst washcoat slurry was then dried in a conventional oven for 1 hour at 100°C to remove excess water and other volatile species. A second catalyst washcoat slurry was prepared comprising platinum and palladium, barium acetate, citric acid and a 5wt% silica-doped alumina particulate support. This second slurry was coated for 30% of the axial length of the substrate from the designated inlet end. The resulting substrate coated with the second catalyst washcoat slurry was then dried in a conventional oven for 1 hour at 100°C to remove excess water and other volatile species and then the dried part was calcined for 1 hour at 500°C to decompose the platinum and palladium salts and fix the platinum and palladium to the silica-doped alumina support.

The concentrations of platinum salts, palladium salts and barium acetate used in the first and second catalyst washcoat slurries was selected so that the calcined product had a first catalyst washcoat layer having a Pt:Pd weight ratio of 6:1 and 3.53 g/L (100g/ft³) barium; and a second catalyst washcoat layer having a Pt:Pd weight ratio of 6:1 and 3.53 g/L (100g/ft³) barium.

The composite oxidation catalyst as a whole had a total platinum group metal loading of 10g/ft³ and a Pt:Pd weight ratio of 6:1.

The product of Comparative Example 1 was oven-aged in air at 650°C for 50 hours.

### Example 2

The method of Comparative Example 1 was repeated but PVP having a K-value of 90, i.e. K90 and a Mw of 1,570,000 g/mol, was added to each of the first catalyst washcoat slurry and the second washcoat slurry in an amount selected so that the concentration of the PVP in each of the first and second washcoat slurries as applied, i.e. in its "wet" or dried but pre-calcined state is 8.48 g/L (240 g/ft³).

### Example 3

The method of Example 2 was repeated but barium hydroxide was used instead of barium acetate to a barium concentration in each of the first and second washcoat slurries of 4.23 g/L (120g/ft³) instead of 3.53 g/L (100 g/ft³).

### Example 4

Various reference and calcined catalysts were prepared similarly to Comparative Example 1 and Example 2 and subjected to a "continuous exotherm" test for DOC exotherm generation using a laboratory bench-mounted diesel engine, except in that in some tests PVP was included in the second catalyst washcoat slurry only, corresponding to the inlet, or front, zone (FZ) and no PVP was added to the first catalyst washcoat slurry, corresponding to the outlet, or rear, zone (RZ). In certain reference samples, the K90 PVP (according to the invention) described in Example 2 is exchanged for K30 PVP having a Mw outside the claimed range.

That is, within each of the following Tests 1 to 5, each catalyst was equivalent save for the modifications noted in each table. Similarly, the same laboratory bench-mounted diesel engine testing was carried out within each example, though variations may exist between Tests 1 to 5 leading to variations in the observed absolute results, it is comparisons and trends with the equivalent product under equivalent conditions which demonstrate the advantage of each modification, and overall the improvements that can be achieved when combining high molecular weight PVP with Pt and Pd in a weight ratio of at least 2:1.

Details of the "continuous exotherm" test are as follows: The engine was fuelled with EUVI B7 fuel (7% Bio fuel) for both engine operation and exhaust gas hydrocarbon enrichment (exotherm generation), running at 2200 rpm and was fitted with an exhaust system including exhaust piping and demountable canning into which each of the catalyst samples could be inserted for testing with the inlet end oriented to the upstream side. The engine was a 7-litre capacity EUV 6-cylinder engine, producing 235 kW at 2500 rpm and the exhaust system included a "7^{th} injector" disposed to inject hydrocarbon fuel directly into the exhaust gas piping downstream from the engine manifold and upstream from the catalyst sample to be tested. This injector is named the "7^{th} injector" because it is additional to the six fuel injectors associated with the cylinders of the engine. For each sample tested, thermocouples were located at the substrate sample inlet and at the substrate sample outlet. Additionally, a hydrocarbon sensor was located at the substrate sample outlet.

Each sample substrate was conditioned at an inlet temperature of 490°C for 20 minutes, followed by a fast cool-down to an inlet temperature of about 320°C. The catalyst was held at about 320°C and about 400 kg/h flow rate into the sample substrate for 10 minutes. Hydrocarbon injection via the 7^{th} injector was then begun at a rate to achieve an exotherm generating 600°C at the sample substrate outlet. This exotherm was maintained at steady state for 5 minutes. A hydrocarbon oxidation catalyst light-out temperature ramp-down was then begun by continuously adjusting the engine load to achieve a 1°C temperature drop per minute at the sample substrate inlet and at a flow rate of 400 kg/h.

In the following Tables, "Tₑₓₒ" refers to the exotherm failure temperature as described herein (i.e. the inlet temperature at which the outlet temperature dropped below 500°C). The lower the inlet temperature at the exotherm failure temperature, the better the catalyst for use in an active regeneration system. This temperature is also referred to as the "quench" temperature, i.e. the inlet exhaust gas temperature at and below which exotherm generation is considered to be "quenching". As a means of providing greater resolution of the "quench" temperature, data for the inlet temperature recorded when 800 ppm hydrocarbons or more was detected at the sample substrate outlet. This information is further useful evidence of catalyst activity in that the more hydrocarbon that slips the catalyst, the less active the catalyst is to combust that slipped hydrocarbon. Therefore, hydrocarbon slip is a measure of the advance towards exotherm extinguishment for the tested sample.

### 1. Investigation of molecular weight of PVP

**Table 1**

| | **Mw (g/mol)** | **Tₑₓₒ (°C)** | **Inlet Temperature at 800ppm C3 HC Slip (°C)** |
|---|---|---|---|
| **Reference - no PVP** | - | 270.8 | 283 |
| **PVP K-30 @8.48 g/L (240g/ft³)** | 66,800 | 270.6 | 289 |
| **in FZ only (Reference)** | | | |
| **PVP K-30 @6.36 g/L (180g/ft³)** | 66,800 | 276.2 | 286 |
| **in FZ only (Reference)** | | | |
| **PVP K-90 @8.48 g/L (240g/ft³)** | 1,570,000 | 260.1 | 279 |
| **in FZ only** | | | |

In these data we see an improvement in HC slip using a PVP K-90 having a Mw of 1,570,000 g/mol, compared to the lower molecular weight PVP K-30 of 66,800 g/mol.

### 2. Comparison of Ba salt and PVP K-90 (Mw 1,570,000 g/mol) vs K-120 (Mw 3,470,000 g/mol)

**Table 2**

| | **Mw (g/mol)** | **Tₑₓₒ (°C)** |
|---|---|---|
| **Ba hydroxide ref - no PVP** | - | 304.2 |
| **Ba hydroxide PVP K-90 in both FZ & RZ** | 1,570,000 | 285.3 |
| **Ba hydroxide PVP K-120 in both FZ & RZ** | 3,470,000 | 292.3 |
| **Ba acetate ref - no PVP** | - | 299.0 |
| **Ba acetate PVP K-90 in both FZ & RZ** | 1,570,000 | 287.2 |

### 3. Comparison of front zone and rear zone coatings, and loadings

**Table 3**

| | **Mw (g/mol)** | **Tₑₓₒ (°C)** | **Inlet Temperature at 800ppm C3 HC Slip (°C)** |
|---|---|---|---|
| **Reference - no PVP** | - | 243.5 | 256.0 |
| **PVP K-90 @8.48 g/L (240g/ft³) in FZ only** | 1,570,000 | 243.5 | 252.1 |
| **PVP K-90 @6.36 g/L (180g/ft³) in FZ only** | 1,570,000 | 244.6 | 253.5 |
| **PVP K-90 @8.48 g/L (240g/ft³) in FZ & RZ** | 1,570,000 | 233.8 | 240.8 |

In these data we see an enhanced benefit for PVP according to the claimed invention when it is at least in the FZ on HC slip.

### 4. PGM level testing

In the following, the PVP was K-90 (Mw = 1,570,000 g/mol) with a loading of 8.48 g/L (240g/ft³), and a 30%/70% axial length FZ/RZ, PGM loading of 1.05 g/L (30 g/ft³) in the FZ and 0.30 g/L (8.5 g/ft³) in the RZ (total PGM on substrate 0.53 g/L (15 g/ft³)).

**Table 4**

| **DOC composition** | | **Tₑₓₒ (°C)** |
|---|---|---|
| **FZ** | **RZ** | |
| **6:1 Pt:Pd - no PVP** | | 294.5 |
| **6:1 Pt:Pd - PVP** | | 273.6 |
| **Beta zeolite - no PVP** | | 292.0 |
| **3:1 Pt:Pd - no PVP** | | 275.3 |
| **3:1 Pt:Pd - PVP** | | 265.3 |
| **2:1 Pt:Pd - no PVP** | **6:1 Pt:Pd - PVP** | 275.1 |
| **2:1 Pt:Pd - PVP** | | 278.5 |
| **1:1 Pt:Pd - no PVP** | | 251.6 |
| **1:1 Pt:Pd - PVP** | | 274.2 |
| **1:2 Pt:Pd - no PVP** | | 250.1 |
| **1:2 Pt:Pd - PVP** | | 256.1 |

It can be seen from these Test 4 data that the DOC inlet temperature when the outlet temperature dropped below 500°C (i.e. the "quench" temperature) is beneficially generally lower for all Pt:Pd weight ratios in the front zone when PVP is additionally present. Moreover, it can be seen that as the Pt:Pd weight ratio is reduced from 6:1, the benefit of additionally including PVP in the washcoat decreases and eventually no benefit, or PVP is detrimental. That is, the Pt:Pd weight ratio activity from Test 4 is 6:1>3:1>2:1, where at 2:1 the presence of PVP shows no particular benefit. At 1:1>1:2, PVP is detrimental to the quench temperature.

### 5. Steady state tests

The steady state test using a bench-mounted diesel engine is where we adjust engine load to hold at a chosen inlet temperature and then inject fuel to carry out an exotherm. We then record the HC (C3 ppm) slip at 650 seconds. If successful we then move down in inlet temperature by 5°C stepwise and repeat this procedure until the test fails; a failure is indicated where >1,200 ppm C3 at the DOC outlet is detected. The rate of fuel injection upstream from the DOC is unchanged throughout the test. The steady state data below show a benefit for addition into the front zone, but an enhanced benefit when PVP (K90 Mw 1,570,000 g/mol) is also added to the rear zone.

**Table 5**

| **DOC Inlet Temperature (°C)** | **HC (C3 ppm) detected at DOC outlet** | | |
|---|---|---|---|
| | **Reference no PVP** | **PVP K-90 in FZ only** | **PVP K-90 in FZ & RZ** |
| **320** | 448.5 | 463.4 | 432.6 |
| **315** | 465.8 | 483.6 | 450.9 |
| **310** | 491.0 | 499.4 | 466.3 |
| **305** | 504.0 | 507.9 | 475.7 |
| **300** | 522.7 | 487.9 | 443.6 |
| **295** | 550.3 | 500.3 | 456.9 |
| **290** | 566.1 | 512.5 | 463.4 |
| **285** | 581.1 | 526.6 | 473.5 |
| **280** | 658.9 | 583.7 | 500.5 |
| **275** | 713.3 | 600.8 | 522.7 |
| **270** | 967.7 | 689.5 | 568.0 |
| **265** | Fail | 766.3 | 606.1 |
| **260** | Fail | Fail | 643.4 |
| **255** | Fail | Fail | 701.3 |
| **250** | Fail | Fail | 1060.0 |

It can be seen from the data presented in Table 5 that the presence of PVP according to the invention in both the front (inlet) and rear (outlet) zones beneficially improves the ability of the catalyst as a whole to oxidise injected hydrocarbons to lower inlet exhaust gas temperatures.

### Example 5

### Comparative Example 5.1 (No PVP)

A similar zone-coated diesel oxidation catalyst as Comparative Example 1 was prepared using a 14.38 cm (5.66-inch) diameter x 12.7 cm (5 inch)-long cordierite flow-through monolith substrate, except in that the first and second catalyst washcoat slurries were each coated over 50% of the axial length of the substrate; and in that the concentrations of platinum salts, palladium salts and barium acetate used in the first and second catalyst washcoat slurries was selected so that the calcined product had a first catalyst washcoat layer having a Pt:Pd weight ratio of 6:1 at total PGM loading of 1.51 g/L (42.86 gft³) and 2.83 g/L (80g/ft³) barium; and a second catalyst washcoat layer having a Pt:Pd weight ratio of 6:1 at 0.25 g/L (7.14 g/ft³) and 2.83 g/L (80g/ft³) barium.

The composite oxidation catalyst as a whole had a total platinum group metal loading of 0.88 g/L (25g/ft³) and a Pt:Pd weight ratio of 6:1.

The catalyst was oven-aged in air at 650°C for 100 hours.

### Comparative Example 5.2 (PVP K13-18/14,200 g/mol)

A Comparative Example 5.2 was prepared based on Comparative Example 5.1 but including 6.36 g/L (180 g/ft³) PVP K13-18/14,200 g/mol in both the front and rear zones.

### Comparative Example 5.3 (PVP K23-27/26,000 g/mol)

A Comparative Example 5.3 was prepared based on Comparative Example 5.1 but including 6.36 g/L (180 g/ft³) PVP K23-27/26,000 g/mol in both the front and rear zones.

### Example 5.4 - according to the invention (PVP K88-96/1,130,000 g/mol)

A Comparative Example 5.4 was prepared based on Comparative Example 5.1 but including 6.36 g/L (180 g/ft³) PVP K88-96/1,130,000 g/mol in both the front and rear zones.

The catalyst samples of this Example 5 were tested using a variation of the bench-mounted engine steady state testing described for Example 4, Test 5 hereinabove, wherein target DOC inlet temperatures correspond to a Swept Volume indicated in Table 6 and target a 600°C DOC outlet temperature and a stable HC slip. An HC slip "fail" is recorded where a C1 HC slip of >3600 ppm is detected; and a DOC outlet temperature "Fail" is indicated where the temperature is significantly below the target 600°C. The results are shown in Table 7 below.

**Table 6**

| **Steady State Step No.** | **1** | **2** | **3** | **4** | **5** | **6** | **7** | **8** |
|---|---|---|---|---|---|---|---|---|
| **Swept Volume (x10³) (per hour units)** | 120 | 100 | 90 | 80 | 70 | 60 | 50 | 40 |
| **Target DOC inlet Temperature (°C)** | 350 | 300 | 300 | 285 | 275 | 265 | 260 | 250 |
| **Target DOC outlet Temperature (°C)** | 600 | 600 | 600 | 600 | 600 | 600 | 600 | 600 |

**Table 7**

| **Steady State Step No.** | **DOC outlet temperature (°C)/C1 HC Slip detected downstream from DOC (ppm)** | | | |
|---|---|---|---|---|
| | **Comparative Example 5.1** | **Comparative Example 5.2** | **Comparative Example 5.3** | **Example 5.4** |
| **1** | 588/2340 | 592/2332 | 593/2335 | 599/2283 |
| **2** | 597/2500 | 596/2325 | 610/2370 | 610/2091 |
| **3** | 591/1930 | 598/1832 | 602/1832 | 607/1670 |
| **4** | 589/2211 | 599/1720 | 605/1669 | 610/1342 |
| **5** | 582/2167 | 588/1732 | 600/1650 | 606/1104 |
| **6** | 589/2135 | 587/>3000 | 604/>3000 | 620/793 |
| **7** | 569/1685 | Fail/Fail | 590/>3000 | 601/584 |
| **8** | Fail/Fail | Fail/Fail | Fail/Fail | 604/>3000 |

From the results presented in Table 7 it can be seen that the catalysts according to the invention and featuring PVP at 180 g/ft³ in both the inlet and outlet zones maintains DOC outlet temperature above the target temperature and at reduced HC slip across all Steady State Swept Volumes compared with Comparative Examples including PVP having a Mw below the range defined by the invention.

### Example 6 - A study of PVP loading vs. corresponding calcination temperature and catalyst activity

A series of aged test parts were prepared having a 30/70 configuration similar to samples of Comparative Example 1 based on a 26.7 cm (10.5-inch) diameter x 10.2 cm (4-inch) diameter ceramic flow-through monolith substrates, i.e. comprising a plurality of channels extending from an inlet face to an outlet face, wherein each channel is open at both ends. The washcoat applied in each of the inlet and outlet zones comprised 5wt% silica-doped alumina, barium hydroxide, platinum and palladium salts and citric acid and various loadings of K-90 PVP (Mw 1,570,000 g/mol), such that the coated substrate comprised 85.4 g/L (1.4 g/in³) 5wt% silica-doped alumina, 7.06 g/L (200 g/ft³) citric acid, 3.53 g/L (100 g/ft³) Ba(OH)₂ and either 3.18 g/L (90 g/ft³), 4.95 g/L (140 g/ft³), 6.71 g/L (190 g/ft³) or 8.48 g/L (240 g/ft³) PVP. The inlet axial 30% zone comprised a total of 1.05 g/L (30.0 g/ft³) PGM at a Pt:Pd weight ratio of 6:1; and the outlet axial 70% zone comprised a total of 0.30 g/L (8.5 g/ft³) PGM at a Pt:Pd weight ratio of 6:1. The total PGM loading on the substrate as a whole was 0.53 g/L (15 g/ft³). A reference part included no additional PVP.

Each coated sample was arranged so that the channels were horizontal on the conveyor belt of a dynamic calcination oven that carried the parts at a defined rate through a series of calcination zones starting at 300°C up to a peak dwell temperature of 520°C over three successive zones. The peak temperature detected in the substrate is shown in Table 8 below. As might be expected, the peak temperature is always seen during the 520°C zones. Temperatures observed above the ambient calcination oven zone temperature is indicative of generation of an exotherm from combustion of organic components in the washcoat, i.e. citric acid and PVP.

**Table 8**

| **Sample PVP loading (g/L (g/ft³))** | **Peak detected exotherm (°C)** |
|---|---|
| 0 (reference) | 567 |
| 3.18 (90) | 625 |
| 4.95 (140) | 686 |
| 6.71 (190) | 755 |
| 8.48 (240) | 812 |

It can be seen from the results in Table 8 that the trend in peak detected exotherm correlates with the trend in PVP concentration in the washcoat.

Each calcined sample was then aged in a static over in air for 650°C for 50 hours. The samples were then tested for exotherm generation activity according to the methodology described in Example 4 hereinabove. The results are presented in Table 9.

**Table 9**

| | **Tₑₓₒ (°C)** | **Inlet Temperature at 1000ppm C3 HC Slip (°C)** |
|---|---|---|
| **Reference - no PVP** | 267.4 | 274.4 |
| **PVP K-90 @3.18 g/L (90g/ft³)** | 260.5 | 271.7 |
| **PVP K-90 @4.95 g/L (140g/ft³)** | 262.3 | 272.2 |
| **PVP K-90 @6.71 g/L (190g/ft³)** | 261.9 | 268.7 |
| **PVP K-90 @8.48 g/L (240g/ft³)** | 262.8 | 270.4 |

From the data presented in Table 9, little difference was seen in the beneficial reduction in exotherm quench temperature observed for the various levels of PVP addition. However, the HC slip data provided better resolution and it can be seen that the trend was 6.71 g/L (190 g/ft³) > 8.48 g/L (240 g/ft³) > 4.95 g/L (140 g/ft³) ≈ 3.18 g/L (90 g/ft³) >> Reference.

## Claims

1. An uncalcined catalyst article precursor for a diesel oxidation catalyst (DOC), the catalyst article precursor comprising:
a substrate comprising a plurality of channels extending from an inlet face to an outlet face, and
a first washcoat layer provided in and/or on walls of the channels of the substrate, comprising Pt, or Pt and Pd in a weight ratio of Pt:Pd of greater than 2:1, a support material and a high molecular weight polymer,
wherein the high molecular weight polymer is a PVP homo- or co-polymer and having a molecular weight of greater than 1,000,000 g/mol to 1,750,000 g/mol.

2. The uncalcined catalyst article precursor according to claim 1, wherein the high molecular weight polymer has a molecular weight of from 1,100,000 to 1,700,000 g/mol, preferably 1,100,000 to 1,600,000 g/mol.

3. The uncalcined catalyst article precursor according to claim 1 or claim 2, wherein the first washcoat layer comprises the high molecular weight polymer in an amount of 1.77 to 10.6 g/L (50 to 300g/ft³), preferably 5.30 to 8.83 g/L (150 to 250g/ft³).

4. The uncalcined catalyst article precursor according to any preceding claim, wherein the first washcoat layer comprises Pd and wherein the weight ratio of Pt:Pd is ≤10:1, preferably ≤6:1, and/or wherein the Pt:Pd is from 10:1 to 2:1, preferably from 6:1 to 3:1.

5. The uncalcined catalyst article precursor according to any preceding claim, wherein the first washcoat layer further comprises barium in an amount of from 0.18 to 7.06 g/L (5 to 200g/ft³), preferably 2.12 to 4.41 g/L (60 to 125g/ft³).

6. The uncalcined catalyst article precursor according to claim 5, wherein the first washcoat layer comprises Ba hydroxide.

7. The uncalcined catalyst article precursor according to any preceding claim, wherein the catalyst article precursor has a total PGM loading of less than 1.06 g/L (30g/ft³), preferably 0.25 to 0.71 g/L (7 to 20 g/ft³).

8. The uncalcined catalyst article precursor according to any preceding claim, wherein the catalyst article precursor further comprises a second washcoat layer having a composition as defined for the first washcoat layer in any of claims 1 to 7 with or without the PVP high molecular weight polymer and provided in and/or on walls of the channels of the substrate, wherein the second washcoat layer has a PGM loading greater than a PGM loading of the first washcoat layer, preferably at least 0.18 g/L (5g/ft³) greater.

9. The uncalcined catalyst article precursor according to claim 8, wherein the second washcoat layer extends from the inlet face and wherein the substrate has a longitudinal length extending from the inlet face to the outlet face, and wherein the second washcoat layer extends 20 to 60% of said longitudinal length.

10. The uncalcined catalyst article precursor according to any of claims 8 to 9, wherein
the second washcoat layer has a PGM loading of less than 1.06 g/L (30g/ft³), preferably from 0.88 to 0.53 g/L (25 to 15g/ft³).

11. The uncalcined catalyst article precursor according to any preceding claim, wherein the first washcoat layer extends from the outlet face and wherein the substrate has a longitudinal length extending from the inlet face to the outlet face, and wherein the first washcoat layer extends 50 to 90% of said longitudinal length.

12. The uncalcined catalyst article precursor according to any preceding claim, wherein the first washcoat layer has a PGM loading of less than 0.71 g/L (20g/ft³), preferably from 0.53 to 0.18 g/L (15 to 5g/ft³).

13. A calcined catalyst article obtained or obtainable by calcining the uncalcined catalyst article precursor according to any preceding claim.

14. An exhaust system for a diesel engine comprising an injector for injecting a hydrocarbon for combustion on a calcined catalyst article of claim 13 into exhaust gas flowing in the exhaust system and operably connected to a source of hydrocarbon and a calcined catalyst article according to claim 13 disposed in a flow direction downstream from the injector, whereby the calcined catalyst article is for generating an exotherm from injected hydrocarbon in contact therewith to heat exhaust gas flowing in the exhaust system, wherein an inlet face of the substrate is oriented to an upstream side to receive hydrocarbon injected from the injector.

15. A method for the manufacture of an uncalcined catalyst article precursor for a diesel oxidation catalyst (DOC), the method comprising:
(i) providing a substrate comprising a plurality of channels extending from an inlet face to an outlet face;
(ii) forming a first washcoat composition; and
(iii) wash-coating the first washcoat composition onto the substrate to form a first washcoat layer;
wherein the first washcoat composition comprises Pt, or Pt and Pd in a weight ratio of Pt:Pd of greater than 2:1, a support material and a high molecular weight polymer; and
wherein the high molecular weight polymer is a PVP homo- or co-polymer having a molecular weight of greater than 1,000,000 g/mol to 1,750,000 g/mol.

## Patentansprüche

1. Unkalzinierter Katalysatorartikelvorläufer für einen Dieseloxidationskatalysator (DOC), der Katalysatorartikelvorläufer umfassend:
ein Substrat, umfassend eine Vielzahl von Kanälen, die sich von einer Einlassfläche zu einer Auslassfläche erstrecken, und
eine erste Washcoatschicht, die in und/oder auf Wänden der Kanäle des Substrats bereitgestellt ist, umfassend Pt oder Pt und Pd in einem Gewichtsverhältnis von Pt : Pd von mehr als 2 : 1, ein Trägermaterial und ein Polymer mit hohem Molekulargewicht,
wobei das Polymer mit hohem Molekulargewicht ein PVP-Homo- oder - Copolymer ist und ein Molekulargewicht von mehr als 1.000.000 g/mol bis 1.750.000 g/mol aufweist.

2. Unkalzinierter Katalysatorartikelvorläufer nach Anspruch 1, wobei das Polymer mit hohem Molekulargewicht ein Molekulargewicht von 1.100.000 bis 1.700.000 g/mol, vorzugsweise 1.100.000 bis 1.600.000 g/mol, aufweist.

3. Unkalzinierter Katalysatorartikelvorläufer nach Anspruch 1 oder 2, wobei die erste Washcoatschicht das Polymer mit hohem Molekulargewicht in einer Menge von 1,77 bis 10,6 g/l (50 bis 300 g/ft³), vorzugsweise 5,30 bis 8,83 g/l (150 bis 250 g/ft³), umfasst.

4. Unkalzinierter Katalysatorartikelvorläufer nach einem der vorstehenden Ansprüche, wobei die erste Washcoatschicht Pd umfasst und wobei das Gewichtsverhältnis von Pt : Pd ≤ 10 : 1 beträgt, vorzugsweise ≤ 6 : 1, und/oder wobei das Pt : Pd von 10 : 1 bis 2 : 1, vorzugsweise von 6 : 1 bis 3 : 1, beträgt.

5. Unkalzinierter Katalysatorartikelvorläufer nach einem der vorstehenden Ansprüche, wobei die erste Washcoatschicht ferner Barium in einer Menge von 0,18 bis 7,06 g/l (5 bis 200 g/ft³), vorzugsweise 2,12 bis 4,41 g/l (60 bis 125 g/ft³), umfasst.

6. Unkalzinierter Katalysatorartikelvorläufer nach Anspruch 5, wobei die erste Washcoatschicht Ba-Hydroxid umfasst.

7. Unkalzinierter Katalysatorartikelvorläufer nach einem der vorstehenden Ansprüche, wobei der Katalysatorartikelvorläufer eine Gesamt-PGM-Beladung von weniger als 1,06 g/l (30 g/ft³), vorzugsweise 0,25 bis 0,71 g/l (7 bis 20 g/ft³), aufweist.

8. Unkalzinierter Katalysatorartikelvorläufer nach einem der vorstehenden Ansprüche, wobei der Katalysatorartikelvorläufer ferner eine zweite Washcoatschicht umfasst, die eine Zusammensetzung, wie für die erste Washcoatschicht in einem der Ansprüche 1 bis 7 definiert, mit oder ohne das PVP-Polymer mit hohem Molekulargewicht aufweist und in und/oder auf Wänden der Kanäle des Substrats bereitgestellt ist, wobei die zweite Washcoatschicht eine PGM-Beladung aufweist, die größer als eine PGM-Beladung der ersten Washcoatschicht, vorzugsweise um mindestens 0,18 g/l (5 g/ft³) größer ist.

9. Unkalzinierter Katalysatorartikelvorläufer nach Anspruch 8, wobei sich die zweite Washcoatschicht von der Einlassfläche erstreckt und wobei das Substrat eine longitudinale Länge aufweist, die sich von der Einlassfläche zu der Auslassfläche erstreckt, und wobei sich die zweite Washcoatschicht über 20 bis 60 % der longitudinalen Länge erstreckt.

10. Unkalzinierter Katalysatorartikelvorläufer nach einem der Ansprüche 8 bis 9,wobei die zweite Washcoatschicht eine PGM-Beladung von weniger als 1,06 g/l (30 g/ft³), vorzugsweise von 0,88 bis 0,53 g/l (25 bis 15 g/ft³), aufweist.

11. Unkalzinierter Katalysatorartikelvorläufer nach einem der vorstehenden Ansprüche, wobei sich die erste Washcoatschicht von der Auslassfläche erstreckt und wobei das Substrat eine longitudinale Länge aufweist, die sich von der Einlassfläche zu der Auslassfläche erstreckt, und wobei sich die erste Washcoatschicht über 50 bis 90 % der longitudinalen Länge erstreckt.

12. Unkalzinierter Katalysatorartikelvorläufer nach einem der vorstehenden Ansprüche, wobei die erste Washcoatschicht eine PGM-Beladung von weniger als 0,71 g/l (20 g/ft³), vorzugsweise von 0,53 bis 0,18 g/l (15 bis 5 g/ft³), aufweist.

13. Kalzinierter Katalysatorartikel, erhalten oder erhältlich durch Kalzinieren des unkalzinierten Katalysatorartikelvorläufers nach einem der vorstehenden Ansprüche.

14. Abgassystem für einen Dieselmotor, umfassend einen Injektor zum Einspritzen eines Kohlenwasserstoffs zur Verbrennung auf einem kalzinierten Katalysatorartikel nach Anspruch 13 in Abgas, das in dem Abgassystem strömt, und der mit einer Kohlenwasserstoffquelle wirkverbunden ist, und einen kalzinierten Katalysatorartikel nach Anspruch 13, der in einer Strömungsrichtung stromabwärts des Injektors eingerichtet ist, wobei der kalzinierte Katalysatorartikel zum Erzeugen einer Exotherme aus eingespritztem Kohlenwasserstoff in Kontakt damit dient, um Abgas, das in das Abgassystem strömt, zu erhitzen, wobei eine Einlassfläche des Substrats zu einer stromaufwärts gelegenen Seite ausgerichtet ist, um Kohlenwasserstoff, der von dem Injektor eingespritzt wird, aufzunehmen.

15. Verfahren zum Herstellen eines unkalzinierten Katalysatorartikelvorläufers für einen Dieseloxidationskatalysator (DOC), das Verfahren umfassend:
(i) Bereitstellen eines Substrats, das eine Vielzahl von Kanälen umfasst, die sich von einer Einlassfläche zu einer Auslassfläche erstrecken;
(ii) Ausbilden einer ersten Washcoatzusammensetzung; und
(iii) Washcoatbeschichten der ersten Washcoatzusammensetzung auf das Substrat, um eine erste Washcoatschicht auszubilden;
wobei die erste Washcoatzusammensetzung Pt oder Pt und Pd in einem Gewichtsverhältnis von Pt : Pd von mehr als 2 : 1, ein Trägermaterial und ein Polymer mit hohem Molekulargewicht umfasst; und
wobei das Polymer mit hohem Molekulargewicht ein PVP-Homo- oder - Copolymer ist, das ein Molekulargewicht von mehr als 1.000.000 g/mol bis 1.750.000 g/mol aufweist.

## Revendications

1. Précurseur d'article catalytique non calciné pour un catalyseur d'oxydation diesel (DOC), le précurseur d'article catalytique comprenant :
un substrat comprenant une pluralité de canaux s'étendant d'une face d'entrée à une face de sortie, et
une première couche d'imprégnation disposée dans et/ou sur les parois des canaux du substrat, comprenant du Pt, ou du Pt et du Pd selon un rapport pondéral Pt:Pd supérieur à 2:1, un matériau de support et un polymère de haut poids moléculaire,
dans lequel le polymère de poids moléculaire élevé est un homo- ou copolymère de PVP et ayant un poids moléculaire de plus de 1 000 000 g/mol à 1 750 000 g/mol.

2. Précurseur d'article de catalyseur non calciné selon la revendication 1, dans lequel le polymère de poids moléculaire élevé a un poids moléculaire allant de 1 100 000 à 1 700 000 g/mol, de préférence de 1 100 000 à 1 600 000 g/mol.

3. Précurseur d'article catalytique non calciné selon la revendication 1 ou la revendication 2, dans lequel la première couche d'imprégnation comprend le polymère de masse moléculaire élevée en une quantité de 1,77 à 10,6 g/L (50 à 300 g/ft³), de préférence de 5,30 à 8,83 g/L (150 à 250 g/ft³).

4. Précurseur d'article catalytique non calciné selon l'une quelconque revendication précédente, dans lequel la première couche d'imprégnation comprend du Pd et dans lequel le rapport pondéral de Pt: Pd est ≤ 10:1, de préférence ≤ 6:1, et/ou dans lequel le Pt:Pd est de 10:1 à 2:1, de préférence de 6:1 à 3:1.

5. Précurseur d'article catalytique non calciné selon l'une quelconque revendication précédente, dans lequel la première couche d'imprégnation comprend en outre du baryum en une quantité de 0,18 à 7,06 g/L (5 à 200 g/ft³), de préférence de 2,12 à 4,41 g/L (60 à 125 g/ft³).

6. Précurseur d'article catalytique non calciné selon la revendication 5, dans lequel la première couche de revêtement comprend de l'hydroxyde de Ba.

7. Précurseur d'article catalytique non calciné selon l'une quelconque revendication précédente, dans lequel le précurseur d'article catalytique présente une charge totale en MGP inférieure à 1,06 g/L (30 g/ft³), de préférence de 0,25 à 0,71 g/L (7 à 20 g/ft³).

8. Précurseur d'article catalytique non calciné selon l'une quelconque revendication précédente, dans lequel le précurseur d'article catalytique comprend en outre une seconde couche d'imprégnation ayant une composition telle que définie pour la première couche d'imprégnation dans l'une quelconque des revendications 1 à 7 avec ou sans le polymère de haut poids moléculaire PVP et disposée dans et/ou sur les parois des canaux du substrat, dans lequel la seconde couche d'imprégnation a une charge de MGP supérieure à une charge de MGP de la première couche d'imprégnation, de préférence supérieure d'au moins 0,18 g/L (5 g/ft³).

9. Précurseur d'article catalytique non calciné selon la revendication 8, dans lequel la seconde couche d'imprégnation s'étend à partir de la face d'entrée et dans lequel le substrat a une longueur longitudinale s'étendant de la face d'entrée à la face de sortie, et dans lequel la seconde couche d'imprégnation s'étend sur 20 à 60 % de ladite longueur longitudinale.

10. Précurseur d'article catalytique non calciné selon l'une quelconque des revendications 8 à 9, dans lequel la seconde couche de revêtement a une charge de MGP inférieure à 1,06 g/L (30 g/ft³), de préférence de 0,88 à 0,53 g/L (25 à 15 g/ft³).

11. Précurseur d'article catalytique non calciné selon l'une quelconque revendication précédente, dans lequel la première couche d'imprégnation s'étend à partir de la face de sortie et dans lequel le substrat a une longueur longitudinale s'étendant de la face d'entrée à la face de sortie, et dans lequel la première couche d'imprégnation s'étend sur 50 à 90 % de ladite longueur longitudinale.

12. Précurseur d'article catalytique non calciné selon l'une quelconque revendication précédente, dans lequel la première couche d'imprégnation a une charge de MGP inférieure à 0,71 g/L (20 g/ft³), de préférence de 0,53 à 0,18 g/L (15 à 5 g/ft³).

13. Article catalytique calciné obtenu ou susceptible d'être obtenu par calcination du précurseur d'article catalytique non calciné selon l'une quelconque revendication précédente.

14. Système d'échappement pour un moteur diesel comprenant un injecteur pour injecter un hydrocarbure pour la combustion sur un article de catalyseur calciné de la revendication 13 dans les gaz d'échappement s'écoulant dans le système d'échappement et relié de manière fonctionnelle à une source d'hydrocarbure et un article de catalyseur calciné selon la revendication 13 disposé dans une direction d'écoulement en aval de l'injecteur, selon lequel l'article de catalyseur calciné est destiné à générer un exotherme à partir de l'hydrocarbure injecté en contact avec celui-ci pour chauffer les gaz d'échappement s'écoulant dans le système d'échappement, dans lequel une face d'entrée du substrat est orientée vers un côté amont pour recevoir l'hydrocarbure injecté par l'injecteur.

15. Procédé de fabrication d'un précurseur d'article catalytique non calciné pour un catalyseur d'oxydation diesel (DOC), le procédé comprenant :
(i) la fourniture d'un substrat comprenant une pluralité de canaux s'étendant d'une face d'entrée à une face de sortie ;
(ii) la formation d'une première composition de couche d'imprégnation ; et
(iii) le dépôt de la première composition de couche d'imprégnation sur le substrat pour former une première couche d'imprégnation ;
dans lequel la première composition de couche d'imprégnation comprend du Pt, ou du Pt et du Pd selon un rapport pondéral Pt:Pd supérieur à 2:1, un matériau de support et un polymère de poids moléculaire élevé ; et
dans lequel le polymère de haut poids moléculaire est un homo- ou copolymère de PVP ayant un poids moléculaire allant de plus de 1 000 000 g/mol à 1 750 000 g/mol.
